# EUROPÄISCHE PATENTSCHRIFT

(11) **EP 0 708 027 B1**
(45) Veröffentlichungstag und Bekanntmachung des Hinweises auf die Patenterteilung: **15.07.1998**
(21) Anmeldenummer: 95115228.9
(22) Anmeldetag: 27.09.1995
(51) Int. Cl.: B65B 19/24

(54) **Faltvorrichtung, insbesondere Faltrevolver, mit Faltdorn**
Folding device, especially folding turret with folding mandrel
Dispositif de pliage, spécialement revolver de pliage, avec mandrin de pliage

(30) Priorität: 19.10.1994 DE 4437404
(43) Veröffentlichungstag der Anmeldung: 24.04.1996
(73) Patentinhaber: Focke & Co. (GmbH & Co.), 27283 Verden (DE)
(72) Erfinder: Focke, Heinz, D-27283 Verden (DE); Bretthauer, Hans-Jürgen, D-28201 Bremen (DE)
(74) Vertreter: Bolte, Erich, Dipl.-Ing.

(56) Entgegenhaltungen:
- EP-A- 0 277 534
- US-A- 4 852 335

## Beschreibung

Die Erfindung betrifft eine Faltvorrichtung, insbesondere einen Faltrevolver, mit wenigstens einer einseitig abstehenden, beidendig offenen Halterung für Zuschnitte und Packungsinhalt, insbesondere Zigaretten, - sogenannter Faltdorn - aus dünnwandigem, metallischem Material.

Eine derartige Faltvorrichtung ist zum Beispiel aus der US-A-4 852 335 bekannt.

Faltdorne sind langgestreckte Hohlkörper, die einseitig abstehend, also auskragend, an einem Faltrevolver oder dergleichen angeordnet sind. Eine Vielzahl derartiger Faltdorne ist längs des Umfangs des Faltrevolvers positioniert und achsparallel gerichtet. Zuschnitte für die Herstellung von Verpackungen werden der Außenseite der Faltdorne zugeführt und auf diesen gefaltet. Der Packungsinhalt, insbesondere eine Gruppe von Zigaretten, wird nach weitgehendem Falten der Zuschnitte in den Faltdorn eingeschoben. Die Einheit aus gefalteten Zuschnitten und Zigaretten-Gruppe wird dann gemeinsam vom Faltdorn abgezogen bzw. aus diesem ausgeschoben. Faltdorne werden überwiegend bei der Fertigung von Zigaretten-Weichbecherpackungen eingesetzt.

Die geschilderte Funktion der Faltdorne erfordert, daß diese aus extrem dünnwandigem Material gefertigt sind. Darüber hinaus sollen die Faltdorne exakt geformt und formstabil sein.

Der Erfindung liegt die Aufgabe zugrunde, die Fertigung von Faltdornen und deren Gestaltung zu verbessern, derart, daß diese mit großer Genauigkeit aus sehr dünnwandigem, metallischem Material gefertigt sein können.

Zur Lösung dieser Aufgabe ist die erfindungsgemäße Faltvorrichtung bzw. sind die an dieser angebrachten Faltdorne dadurch gekennzeichnet, daß
a) der aus mindestens einem Materialzuschnitt geformte Faltdorn mindestens eine durch Schweißen hergestellte Längsnaht aufweist,
b) die Längsnaht durch Laserschweißen hergestellt ist.

Durch die auf anderen technischen Gebieten bekannte Laser-Schweißtechnik ist es möglich, bei sehr dünnwandigem, metallischem Material eine ebenfalls äußerst dünne bzw. feine Schweißnaht herzustellen, die örtliche Materialverdickungen vermeidet.

Vorzugsweise besteht ein erfindungsgemäß ausgebildeter Faltdorn aus zwei im Querschnitt U-förmig ausgebildeten Dornteilen, die im Bereich von einander gegenüberliegenden Dornwandungen, insbesondere im Bereich schmaler Seitenwände, je durch eine Laser-Schweißnaht miteinander verbunden sind. Die im Querschnitt U-förmigen Dorn-Hälften sind fertigungstechnisch vorteilhaft.

Vorteilhafterweise sind einander zugekehrte (Längs-)Ränder der Dornteile im Bereich einer Längsmittelebene des Faltdorns stumpf durch Laserschweißen miteinander verbunden. Die Schweißnaht wird unter Anwendung der Lasertechnik so hergestellt, daß die miteinander zu verbindenden Flächen der Längsränder in einen formbaren Zustand gebracht und während dessen miteinander verbunden werden.

Alternativ kann die bzw. können die Laser-Schweißnähte auch im Bereich einer Materialüberlappung gebildet sein, nämlich im Bereich von abgekröpften, streifenförmigen Rändern der Dornteile.

Der Faltdorn bzw. die Dornteile bestehen vorzugsweise aus Federstahl.

Weiterhin befaßt sich die Erfindung mit einer sinnvollen Verbindung von Faltdornen mit dem Faltrevolver oder einer anderen Halterung.

Ein Ausführungsbeispiel der Erfindung, nämlich ein Faltdorn mit Verankerung an einem Faltrevolver, wird nachfolgend anhand der Zeichnungen näher erläutert. Es zeigt:

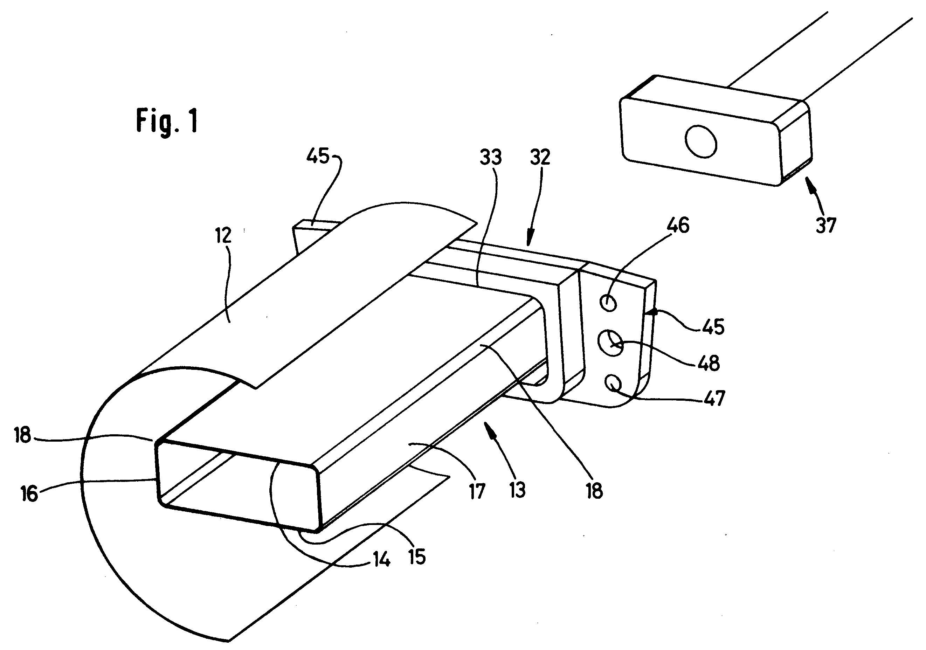

- Fig. 1: einen Faltdorn als Einzelheit einer Faltvorrichtung in perspektivischer Darstellung,
- Fig. 2: einen Faltdorn mit einer Zigaretten-Gruppe im Querschnitt, bei stark vergrößertem Maßstab,

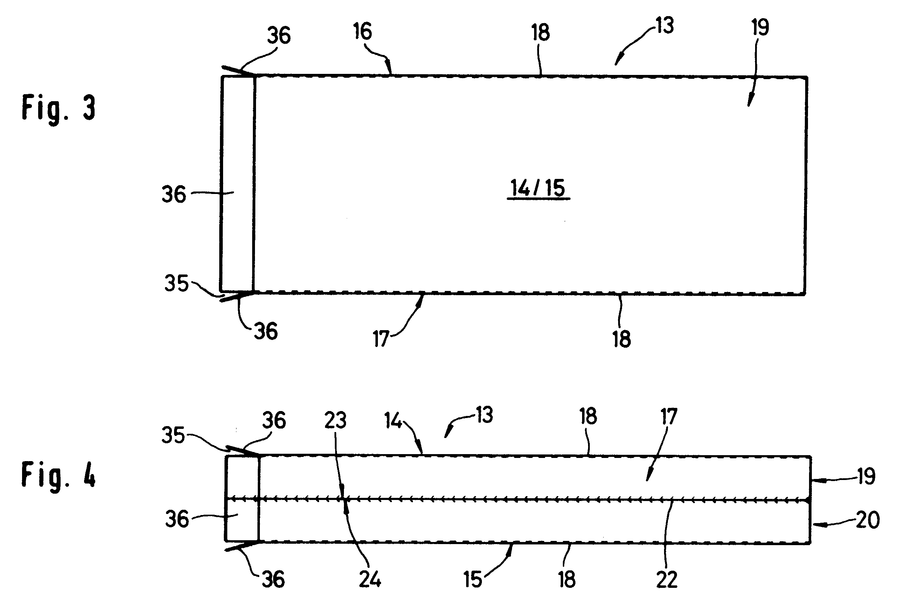

- Fig. 3: einen Faltdorn als Einzelheit in Draufsicht,
- Fig. 4: den Faltdorn gemäß Fig. 3 in Seitenansicht,
- Fig. 5: einen Faltdorn mit einseitiger Halterung im Längsschnitt,
- Fig. 6: Einzelheiten einer Verankerung eines Faltdorns im Horizontalschnitt,
- Fig. 7: eine Darstellung analog Fig. 2 einer anderen Ausführung des Faltdorns,
- Fig. 8: eine weitere Ausführungsform eines Faltdorns in Draufsicht, analog zu Fig. 3,
- Fig. 9: eine Einzelheit der Verankerung des Faltdorns in einer Halterung, als Alternative zu Fig. 5.

Die gezeigten Ausführungsbeispiele befassen sich mit der Herstellung von Zigaretten-Packungen für jeweils eine Gruppe von Zigaretten 10, also eine Zigaretten-Gruppe 11. Bei der im einzelnen nicht dargestellten Verpackung handelt es sich vorzugsweise um eine Weichbecherpackung aus mehreren Zuschnitten 12 aus Verpackungsmaterial, insbesondere Papier und Stanniol. Die Zuschnitte 12 werden auf einem Formkörper gefaltet, nämlich auf einem Faltdorn 13, dessen Außenkontur und -abmessungen den Innenabmessungen der Verpackung entsprechen. Die Zuschnitte 12 werden nacheinander an den Faltdorn 13 angelegt und auf diesem gefaltet, derart, daß ein einseitig offener Becher entsteht. Ein Beispiel für eine mit derartigen Faltdornen 13 ausgestattete Verpackungsvorrichtung beschreibt US 4 852 335.

Der Faltdorn 13 ist als langgestreckter Hohlkörper ausgebildet und an beiden Enden offen. Der Faltdorn 13 hat einen annähernd rechteckigen Querschnitt, begrenzt durch eine Oberwand 14, eine entsprechend ausgebildete Unterwand 15 und diese miteinander verbindende langgestreckte Seitenwände 16, 17. Längskanten 18 sind abgerundet, beispielsweise mit einem Radius von 2 mm.

Der Faltdorn 13 besteht vorzugsweise aus einem hochlegierten, nichtrostenden Federstahlblech. Dieses Material erlaubt eine extrem geringe Wandungsdicke von vorzugsweise 0,3 mm.

Der Faltdorn 13 besteht bei den vorliegenden Ausführungsbeispielen aus zwei Teilen, nämlich aus zwei im Querschnitt U-förmigen Dornteilen 19 und 20. Diese sind im vorliegenden Falle gleich groß und darüber hinaus in gleicher Weise gestaltet. Im Bereich einer (gedachten) mittleren Querebene sind die Dornteile 19, 20 miteinander verbunden, und zwar jeweils durch eine Laser-Schweißnaht 21, 22. Diese erstreckt sich vorzugsweise über die gesamte Länge des Faltdorns 13.

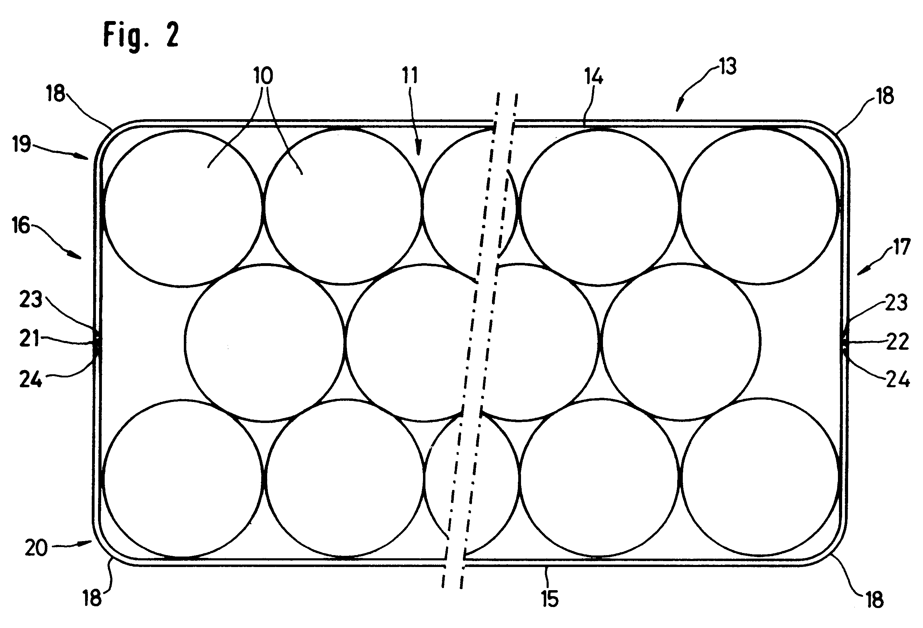

Bei dem bevorzugten Ausführungsbeispiel gemäß Fig. 2 sind die Dornteile 19 und 20 "stumpf" durch Laserschweißen miteinander verbunden. Die Laser-Schweißnähte 21, 22 erstrecken sich dabei unmittelbar im Querschnittsbereich der Wandungen der Dornteile 19, 20. Bei Anwendung des Schweißverfahrens wird so vorgegangen, daß im Bereich von miteinander zu verbindenden Stoßkanten 23, 24 freie Kantenflächen durch Lasereinwirkung plastifiziert bzw. fließfähig gemacht und direkt miteinander verbunden werden. Die Seitenwände 16, 17 sind im Bereich der Laser-Schweißnähte 21, 22 innen und außen glattflächig.

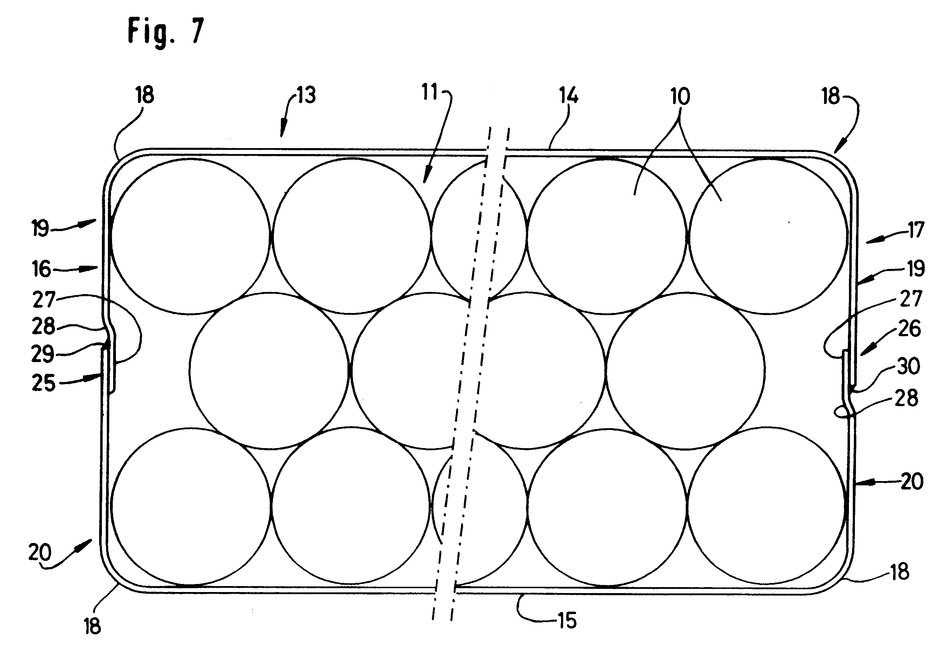

In Fig. 7 ist hinsichtlich der Gestaltung der Dornteile 19 und 20 sowie der durch Laserschweißen hergestellten Verbindung derselben eine Alternative gezeigt. Die Seitenwände 16 und 17 sind hier so gestaltet, daß sie eine Überlappung 25, 26 bilden. Ein innerer Schenkel 27 der Überlappung 25, 26 ist mit einer nach innen gerichteten Abkröpfung 28 ausgebildet. Durch diese entsteht an der Außenseite der Seitenwände 16, 17 eine nutartige Vertiefung. In deren Bereich ist eine Schweißnaht geführt, nämlich eine Laser-Schweißnaht 29, 30. Auch diese ist, wie bei dem Ausführungsbeispiel der Fig. 2, ohne zusätzliches Schweißmaterial hergestellt, allein durch den Schmelzvorgang im Bereich der miteinander zu verbindenden Flächen und Wandungen.

Auch bei dem Ausführungsbeispiel gemäß Fig. 7 sind die beiden Dornteile 19 und 20 des Faltdorns 13 übereinstimmend ausgebildet. Es werden demnach stets übereinstimmende Teile bei entsprechender Relativstellung der Überlappungen 25, 26 miteinander verbunden. Bei dem Ausführungsbeispiel der Fig. 2 erstrecken sich die Laser-Schweißnähte 21, 22 in einer horizontalen Mittelebene des Faltdorns 13.

Die Faltdorne 13 sind lediglich an einem Ende gelagert bzw. verankert, bei dem vorliegenden Ausführungsbeispiel an bzw. in einer Tragscheibe 31 eines Faltrevolvers. Letzterer kann in der in US 4 852 335 beschriebenen Weise ausgebildet sein.

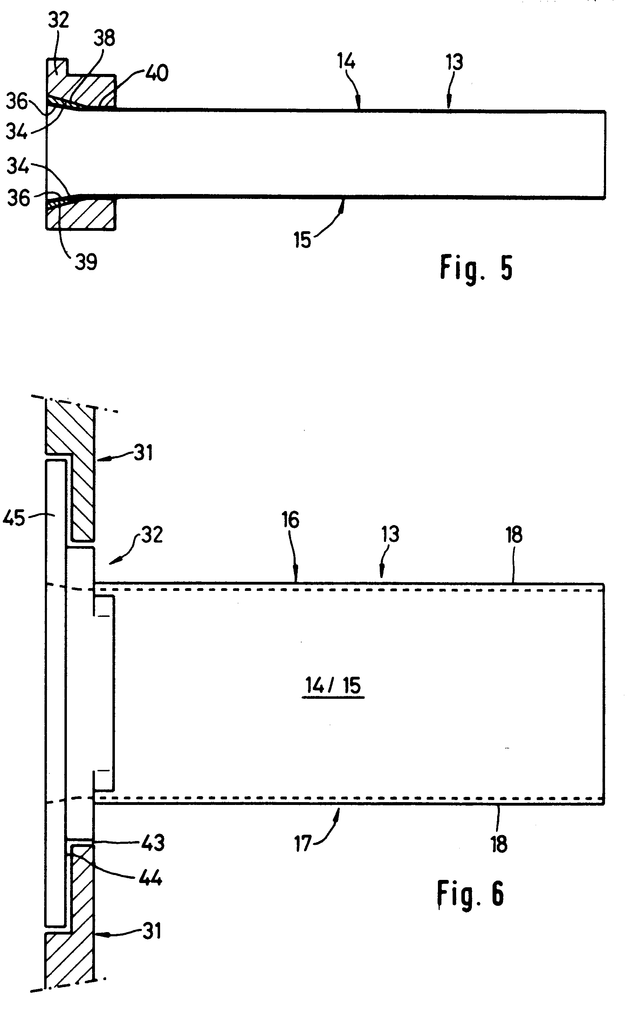

Die Faltdorne 13 sind jeweils mit einem Ende fest in einem Halteorgan verankert. Bei diesem handelt es sich um ein Verbindungsstück 32, welches den Faltdorn 13 an seinem Ende vollständig umgibt und mit dessen Ende bündig abschließt (Fig. 6). Das Verbindungsstück 32 wiederum ist so ausgebildet, daß es in wirksamer Weise mit dem Faltrevolver bzw. der Tragscheibe 31 verbunden werden kann.

Das Ende des Faltdorns 13 sitzt in einer Öffnung 33 des Verbindungsstücks 32. Die Abmessungen der Öffnung 33 sind mindestens im Bereich von Oberwand 14 und Unterwand 15 größer als die Außenabmessungen des Faltdorns 13. In einem so gebildeten, beidseitig offenen Zwischenraum ist eine ursprünglich formbare und aushärtbare Verankerungsmasse 34 eingefüllt. Diese ist bei der Herstellung der Verbindung formbar bzw. flüssig. Nach einem Aushärtungsprozeß ist die Verankerungsmasse 34 verfestigt, so daß der Faltdorn 13 dauerhaft im Verbindungsstück 32 verankert ist.

Bei der Verankerungsmasse 34 handelt es sich vorzugsweise um einen Zwei-Komponenten-Metallkleber, insbesondere mit einem Anteil an Aluminium. Der Zwei-Komponenten-Metallkleber ist grundsätzlich bekannt.

Das dem Faltrevolver bzw. der Tragscheibe 31 zugekehrte Ende des Faltdorns 13 dient der Einführung des Packungsinhalts, nämlich der Zigaretten-Gruppe 11, in den Faltdorn 13. Dieses Ende ist trichterförmig ausgebildet. Zu diesem Zweck sind Oberwand 14, Unterwand 15 sowie die Seitenwände 16 und 17 im Bereich der Längskanten 18 durch Trennschnitte 35 voneinander getrennt und jeweils nach außen geformt, so daß schräg gerichtete Flügel 36 im Bereich der Faltdornwandungen entstehen. Mit diesen zum Ende hin divergierenden Flügeln 36 ist der Faltdorn 13 in der Verankerungsmasse 34 positioniert. Diese stabilisiert so die Trichterform des Faltdorns 13 am Einschubende. Die Zigaretten-Gruppe 11 wird durch einen in Längsrichtung des Faltdorns 13 bewegbaren Stößel 37 zunächst in den Faltdorn 13 eingeschoben und danach auf der gegenüberliegenden Seite unter Mitnahme der teilweise gefalteten Packung ausgeschoben.

Der Faltdorn 13 kann mit dem trichterförmig ausgebildeten Ende auf verschiedene Weise im Verbindungsstück 32, nämlich in der Öffnung 33, verankert sein. Bei dem bevorzugten Ausführungsbeispiel gemäß Fig. 5 ist der Querschnitt der Öffnung 33 unterschiedlich ausgebildet. Auf der freien Einführungsseite des Faltdorns 13 ist die Öffnung 33 durch trichterförmige Flächen 38 begrenzt. Diese Flächen 38 haben einen größeren Winkel als die schräggerichteten Flügel 36 des Faltdorns 13. Dadurch entsteht ein spaltartiger Hohlraum 39 zwischen den Flügeln 36 und der Begrenzung der Öffnung 33. Der Hohlraum 39 ist mit einer in Längsrichtung des Faltdorns 13 abnehmenden Querabmessung bzw. Breite, also im Querschnitt keilförmig ausgebildet, derart, daß ein Abschnitt 40 des Verbindungsstücks 32 unmittelbar an der Wandung des Faltdorns 13 anliegt. Der Hohlraum 39 ist mit der Verankerungsmasse 34 ausgefüllt.

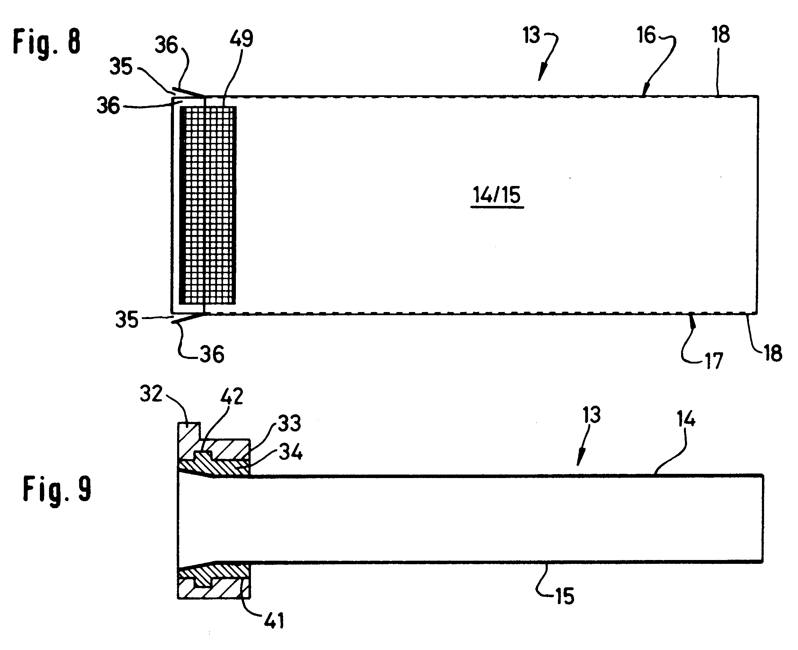

Bei dem Ausführungsbeispiel gemäß Fig. 9 erstreckt sich ein durch die Öffnung 33 und den Faltdorn 13 gebildeter Hohlraum 41 über die volle Querabmessung des Verbindungsstücks 32. Auf der Außenseite ist in der Wandung des Verbindungsstücks 32 eine Nut bzw. eine Vertiefung 42 gebildet, die mit Verankerungsmasse 34 ausgefüllt ist.

Zur besseren Verankerung des Faltdorns 13 im Verbindungsstück 32 sind beim Ausführungsbeispiel gemäß Fig. 8 außen am Faltdorn 13 Haltemittel befestigt. Es handelt sich dabei im vorliegenden Fall um Haltestreifen 49 aus einem Drahtgewebe, insbesondere aus Edelstahl. Die Haltestreifen 49 sind durch Laser-Schweißung an den Wandungen des Faltdorns 13 befestigt, und zwar hier im Bereich der Flügel 36. Die Verankerungsmasse 34 tritt in die Öffnungen bzw. Vertiefungen der Haltestreifen 49 zur Verbesserung der Haftung ein.

Faltdorn 13 und Verbindungsstück 32 werden als Einheit mit dem Faltrevolver verbunden. Dessen Tragscheibe 31 ist im Bereich der Faltdorne 13 mit Durchbrüchen 43 bzw. Öffnungen versehen, in die jeweils ein Faltdorn 13 bzw. ein Verbindungsstück 32 passend und formschlüssig einsetzbar ist. Der Durchbruch 43 ist im Querschnitt stufenförmig ausgebildet, mindestens im Bereich von zwei einander gegenüberliegenden Seiten. Es entsteht dadurch jeweils ein Versatz 44. In diesen tritt ein sich beidseitig erstreckender Flansch 45 des Verbindungsstücks 32 passend ein.

Die beiden einander gegenüberliegenden, seitwärts gerichteten Flansche 45 sind mit Bohrungen für Befestigungsmittel versehen. Es handelt sich dabei um obere und untere Bohrungen 46, 47 für den Durchtritt von Befestigungsschrauben. Zwischen diesen Bohrungen 46, 47 befindet sich eine Zentrierbohrung 48 für den Durchtritt eines Zentrierstiftes (nicht gezeigt). Dieser ist in exakter Position an der Tragscheibe 31 angebracht, und zwar am Versatz 44. Der Zentrierstift bewirkt in der Zentrierbohrung 48 die exakte Positionierung des Faltdorns 13. In die Bohrungen 46 und 47 eintretende Verbindungsbolzen oder -schrauben bewirken die Befestigung am Faltrevolver.

## Patentansprüche

1. Faltvorrichtung, insbesondere Faltrevolver, mit wenigstens einer einseitig abstehend positionierten, beidendig offenen Halterung für Zuschnitte (12) und Packungsinhalt, insbesondere Zigaretten (10), - sogenannter Faltdorn (13) - aus dünnwandigem, metallischem Material, **dadurch gekennzeichnet**, daß
a) der aus mindestens einem Materialzuschnitt geformte Faltdorn (13) mindestens eine durch Schweißen hergestellte Längsnaht (21, 22; 29, 30) aufweist,
b) die Längsnaht (21, 22; 29, 30) durch Laserschweißen hergestellt ist.

2. Faltvorrichtung nach Anspruch 1, dadurch gekennzeichnet, daß der Faltdorn (13) aus zwei im Querschnitt U-förmig ausgebildeten, vorzugsweise übereinstimmenden Dornteilen (19, 20) besteht, die im Bereich von einander gegenüberliegenden Dornwandungen, insbesondere im Bereich schmaler Seitenwände (16, 17), durch je eine Laser-Schweißnaht (21, 22; 29, 30) miteinander verbunden sind.

3. Faltvorrichtung nach Anspruch 1 oder 2, dadurch gekennzeichnet, daß die Dornteile (19, 20) mit in Längsrichtung verlaufenden Stoßkanten (23, 24), insbesondere im Bereich der Seitenwände (16, 17), aneinanderliegen und ohne Zuführung von Schweißmaterial durch Laser-Schweißnähte (21, 22) stumpf miteinander verbunden sind.

4. Faltvorrichtung nach Anspruch 1 oder einem der weiteren Ansprüche, dadurch gekennzeichnet, daß im Bereich von Laser-Schweißnähten (29, 30) miteinander zu verbindende Teilwandungen durch Verformen nach innen zurückgesetzt sind unter Bildung einer Abkröpfung (28), derart, daß Überlappungen (25, 26) der Seiten-Wände (16, 17) an der Außenseite des Faltdorns in einer gemeinsamen Ebene liegen, wobei die Laser-Schweißnähte (29, 30) in einer durch die Abkröpfung (26) gebildeten Nut bzw. Kehle verlaufen.

5. Faltvorrichtung nach Anspruch 1 oder einem der weiteren Ansprüche, dadurch gekennzeichnet, daß der Faltdorn (13) an einem der Faltvorrichtung bzw. einer Tragscheibe (31) derselben zugekehrten Ende für die Einführung der Zigaretten-Gruppe (11) trichterförmig aufgeweitet ist, insbesondere durch Bildung von getrennten Flügeln (36) von Oberwand (14) und/oder Unterwand (15) und/oder Seitenwänden (16, 17) des Faltdorns (13).

6. Faltvorrichtung nach Anspruch 1 oder einem der weiteren Ansprüche, dadurch gekennzeichnet, daß ein der Faltvorrichtung bzw. dessen Tragscheibe (31) zugekehrtes Ende des Faltdorns in der Tragscheibe (31) durch eine ursprünglich formbare, aushärtbare Verankerungsmasse (34) fixiert ist, insbesondere durch einen Zwei-Komponenten-Metallkleber.

7. Faltvorrichtung nach Anspruch 6, dadurch gekennzeichnet, daß der Faltdorn im Verankerungsbereich an der Tragscheibe (31) an der Außenseite, mindestens im Bereich von Oberwand (14) und Unterwand (15), mit Vorsprüngen und Vertiefungen versehen ist zur formschlüssigen Verbindung mit der Verankerungsmasse (34), vorzugsweise mit gitterartig ausgebildeten Haltestreifen (49), die vorzugsweise durch Laserschweißen am Faltdorn (13) befestigt sind.

8. Faltvorrichtung nach Anspruch 1 oder einem der weiteren Ansprüche, dadurch gekennzeichnet, daß das eine Ende des Faltdorns (13) mit einem Verbindungsstück (32) an der Faltvorrichtung bzw. an der Tragscheibe (31) befestigt ist, wobei das Ende des Faltdorns (13) mit Hilfe der Verankerungsmasse (34) in einer Öffnung (33) des Verbindungsstücks (32) fixiert ist.

9. Faltvorrichtung nach Anspruch 8 oder einem der weiteren Ansprüche, dadurch gekennzeichnet, daß die Öffnung (33) im Verbindungsstück (32) zur Aufnahme eines trichterförmig ausgebildeten Endes des Faltdorns (13) ebenfalls trichterförmig ausgebildet ist, derart, daß Begrenzungsflächen der Öffnung (33) unter einem Winkel zum Faltdorn (13) bzw. zu den Flügeln (36) gerichtet und die in den so gebildeten spaltartigen Hohlraum (39) eingefüllte Verankerungsmasse (34) im Querschnitt keilförmig ausgebildet ist.

10. Faltvorrichtung nach Anspruch 8, dadurch gekennzeichnet, daß das Verbindungsstück (32) passend in einem Durchbruch (43) der Tragscheibe (31) befestigt ist, vorzugsweise mit Flanschen (45), die Bohrungen (46, 47) für Verbindungsbolzen oder -schrauben und eine Zentrierbohrung (48) für einen Zentrierzapfen aufweisen.

## Claims

1. Folding device, especially a folding turret, with at least one holder for blanks (12) and pack content, especially cigarettes (10), a so-called folding mandrel (13), which is positioned so as to project on one side and is open at both ends and which is made from thin-walled metallic material, characterized in that
a) the folding mandrel (13) shaped from at least one material blank has at least one longitudinal seam (21, 22; 29, 30) which is made by welding,
b) the longitudinal seam (21, 22; 29, 30) is made by laser welding.

2. Folding device according to Claim 1, characterized in that the folding mandrel (13) comprises two preferably identical mandrel parts (19, 20) which are designed with a U-shaped cross section and which are connected to one another, in each case by means of a laser-weld seam (21, 22; 29, 30), in the region of mandrel walls located opposite one another, especially in the region of narrow side walls (16, 17).

3. Folding device according to Claim 1 or 2, characterized in that the mandrel parts (19, 20) bear on one another with abutting edges (23, 24) extending in the longitudinal direction, especially in the region of the side walls (16, 17), and are butt-connected to one another by means of laser-weld seams (21, 22), without welding material being supplied.

4. Folding device according to Claim 1 or one of the further claims, characterized in that, in the region of laser weld seams (29, 30), part walls to be connected to one another are set back inwards by deformation, to form a bend (28), in such a way that overlaps (25, 26) of the side walls (16, 17) lie in a common plane on the outside of the folding mandrel, the laser weld seams (29, 30) extending in a groove or flute formed by the bend (26).

5. A folding device according to Claim 1 or one of the further claims, characterized in that the folding mandrel (13), at one end facing the folding device or a carrier disc (31) of the latter, is widened in a funnel-shaped manner for the introduction of the cigarette group (11), especially as a result of the formation of separated wings (36) of the upper wall (14) and/or lower wall (15) and/or side walls (16, 17) of the folding mandrel (13).

6. A folding device according to Claim 1 or one of the further claims, characterized in that one end of the folding mandrel, said end facing the folding device or the carrier disc (31) of the latter, is fixed in the carrier disc (31) by means of an originally mouldable hardenable anchoring compound (34), especially by means of a two-component metal adhesive.

7. Folding device according to Claim 6, characterized in that the folding mandrel, in the anchoring region on the carrier disc (31), is provided on the outside, at least in the region of the upper wall (14) and lower wall (15), with projections and depressions for positive connection to the anchoring compound (54), preferably with mesh-like holding strips (49) which are fastened to the folding mandrel (13) preferably by laser welding.

8. Folding device according to Claim 1 or one of the further claims, characterized in that one end of the folding mandrel (13) is fastened by means of a connecting piece (32) to the folding device or to the carrier disc (31), the end of the folding mandrel (13) being fixed in an orifice (33) of the connecting piece (32) by means of the anchoring compound (34).

9. Folding device according to Claim 8 or one of the further claims, characterized in that the orifice (33) in the connecting piece (32) for receiving a funnel-shaped end of the folding mandrel (13) is likewise made funnel-shaped, in such a way that limiting faces of the orifice (33) are directed at an angle to the folding mandrel (13) or to the wings (36), and the anchoring compound (34) introduced into the gap-like cavity (39) thus formed is designed with a wedge-shaped cross section.

10. Folding device according to Claim 8, characterized in that the connecting piece (32) is fastened with a fit in a perforation (43) of the carrier disc (31), preferably by means of flanges (45) which have bores (46, 47) for connecting bolts or connecting screws and a centring bore (48) for a centring pin.

## Revendications

1. Dispositif de pliage, en particulier revolver de pliage, comportant au moins un support placé saillant d'un côté et ouvert aux deux extrémités pour des flans (12) et un contenu de paquet, en particulier des cigarettes (10), dit mandrin de pliage (13), en matériau métallique à paroi mince, caractérisé par le fait que
a) le mandrin de pliage (13), formé d'au moins une feuille découpée de matériau, présente au moins un joint longitudinal réalisé par soudage (21, 22 ; 29, 30),
b) ce joint longitudinal (21, 22 ; 29, 30) est réalisé par soudage au laser.

2. Dispositif de pliage selon la revendication 1, caractérisé par le fait que le mandrin de pliage (13) est constitué de deux parties à section en U de préférence concordantes (19, 20) qui sont jointes dans la zone de parois opposées du mandrin, en particulier dans la zone de parois latérales étroites (16, 17), par un joint soudé au laser (21, 22 ; 29, 30).

3. Dispositif de pliage selon l'une des revendications 1 et 2, caractérisé par le fait que les parties (19, 20) du mandrin s'appuient l'une contre l'autre par des bords s'étendant dans la direction longitudinale (23, 24), en particulier dans la zone des parois latérales (16, 17), et sont assemblées bord à bord par des joints soudés au laser (21, 22) sans matériau d'apport.

4. Dispositif de pliage selon la revendication 1 ou une des autres revendications, caractérisé par le fait que, dans la zone de joints soudés au laser (29, 30), des parois partielles à assembler sont reculées vers l'intérieur par déformation avec formation d'un coude (28), de façon telle que des chevauchements (25, 26) des parois latérales (16, 17) soient dans un plan commun sur le côté extérieur du mandrin de pliage, les joints soudés au laser (29, 30) s'étendant dans une rainure ou gorge formée par le coude (26).

5. Dispositif de pliage selon la revendication 1 ou une des autres revendications, caractérisé par le fait que le mandrin de pliage (13) est évasé en entonnoir à une extrémité dirigée vers le dispositif de pliage ou un disque support (31) de celui-ci pour l'introduction du groupe de cigarettes (11), en particulier par formation d'ailes séparées (36) de la paroi supérieure (14) et/ou de la paroi inférieure (15) et/ou des parois latérales (16, 17) du mandrin de pliage (13).

6. Dispositif de pliage selon la revendication 1 ou une des autres revendications, caractérisé par le fait qu'une extrémité du mandrin de pliage dirigée vers le dispositif de pliage ou le disque support (31) de celui-ci est fixée dans le disque support (31) par une matière d'ancrage initialement plastique et durcissable (34), en particulier par une colle à métaux bicomposant.

7. Dispositif de pliage selon la revendication 6, caractérisé par le fait que le mandrin de pliage est, dans la zone d'ancrage au disque support (31), pourvu sur le côté extérieur, au moins dans la zone de la paroi supérieure (14) et de la paroi inférieure (15), de saillies et de creux pour l'union de forme à la matière d'ancrage (34), de préférence de bandes de maintien du genre treillis (49) qui sont fixées au mandrin de pliage (13) de préférence par soudage au laser.

8. Dispositif de pliage selon la revendication 1 ou une des autres revendications, caractérisé par le fait qu'une extrémité du mandrin de pliage (13) est fixée par un raccord (32) au dispositif de pliage ou au disque support (31), cette extrémité du mandrin (13) étant fixée au moyen d'une matière d'ancrage (34) dans une ouverture (33) du raccord (32).

9. Dispositif de pliage selon la revendication 8 ou une des autres revendications, caractérisé par le fait que l'ouverture (33) du raccord (32) est en forme d'entonnoir pour recevoir une extrémité également en forme d'entonnoir du mandrin de pliage (13), de façon telle que les surfaces de limitation de l'ouverture (33) fassent un angle avec le mandrin de pliage (13), plus précisément avec les ailes (36), et la matière d'ancrage (34) mise dans la cavité du genre fente (39) ainsi formée ait une section en forme de coin.

10. Dispositif de pliage selon la revendication 8, caractérisé par le fait que le raccord (32) est fixé de manière ajustée dans un trou (43) du disque support (31), de préférence par des brides (45) qui présentent des trous (46, 47) pour des boulons ou des vis d'assemblage et un trou de centrage (48) pour un doigt de centrage.
